Europäisches Patentamt

European Patent Office

Office européen des brevets

(19)

(11) **EP 1 260 135 A1**

## (12) DEMANDE DE BREVET EUROPEEN

(43) Date de publication:
**27.11.2002 Bulletin 2002/48**

(51) Int Cl.⁷: **A01G 9/14**, A01G 9/24,
E04H 15/54

(21) Numéro de dépôt: 02358008.7

(22) Date de dépôt: **26.04.2002**

(84) Etats contractants désignés:
**AT BE CH CY DE DK ES FI FR GB GR IE IT LI LU
MC NL PT SE TR**
Etats d'extension désignés:
**AL LT LV MK RO SI**

(30) Priorité: **04.05.2001 FR 0105967**

(71) Demandeur: **FILCLAIR S.A.
F-13770 Venelles (FR)**

(72) Inventeur: **Thery, Denis Charles
13540 Puyricard (FR)**

(74) Mandataire: **Domange, Maxime
Cabinet Beau de Lomenie,
232, avenue du Prado
13295 Marseille Cedex 08 (FR)**

(54) **Dispositif de couverture réversible de toiture de bâtiments de type serre par une bâche**

(57) Dispositif de couverture réversible de toiture de bâtiment par une bâche (1) caractérisé en ce qu'il comprend un système de maintien et blocage de ladite bâche en position de couverture totale ou partielle, dans lequel .

- au moins une sangle (4) recouvre ladite bâche, et
- une rampe de blocage (5), de préférence tubulaire est fixée le long du bord longitudinal inférieur de la toiture, et
- ladite sangle (4) passe autour de ladite rampe de blocage (5) et est fixée à une de ses extrémités à un organe de tensionnement $(6_1, 6_2)$ par dessous la toiture,

- ledit organe de tensionnement $(6_1, 6_2)$ permettant de tendre la sangle pour maintenir la bâche contre ladite toiture en position de couverture totale ou partielle et, permettant, en outre, de bloquer ledit tube d'enroulement (3) contre ladite rampe de blocage (5) lorsque ladite bâche est en position de couverture totale.

FIG.3

EP 1 260 135 A1

## Description

La présente invention concerne un dispositif de couverture réversible de toiture par une bâche, et, plus particulièrement, un dispositif de couverture de bâtiment de type serre à usage agricole ou horticole avec une bâche qui est un film thermoplastique de faible épaisseur sujet à fluage.

Ce dispositif de couverture comprend de façon connue une bâche rectangulaire comprenant deux bords longitudinaux dont un premier bord longitudinal est fixé le long d'un bord longitudinal supérieur de la toiture, c'est-à-dire en partie haute, et l'autre bord longitudinal de la bâche est fixé à un tube d'enroulement. Le principe de couverture de la toiture consiste en l'enroulement de la bâche autour dudit tube d'enroulement depuis une position fermée vers une position partiellement ouverte puis d'ouverture totale.

La toiture est constituée d'une ossature comprenant des profilés transversaux droits ou incurvés, notamment en forme d'arc selon que la toiture est respectivement plane ou incurvée, lesdits profilés servant de support de maintien de films ou plaques cintrées en matériaux souples ou semi-rigides, notamment en PVC, polyéthylène ou polycarbonate ou de panneaux rigides de verre ou de polycarbonate, de préférence transparent ou translucide.

Ce type de dispositif de couverture de toiture est plus particulièrement utilisé sur les toitures de bâtiments du type serres agricole ou horticole, notamment les serres de type "serre-tunnel" qui comportent des profilés en forme d'arceaux qui s'étendent depuis le faîtage jusqu'au sol, ou les serres dites "serre-chapelle" dont la toiture comprend des profilés droits ou incurvés qui s'étendent depuis le faîtage jusqu'au bord supérieur d'une paroi latérale plane verticale ou sensiblement verticale du bâtiment.

Lesdits profilés sur lesquels repose la bâche sont disposés transversalement par rapport auxdits bords longitudinaux de la toiture et de la bâche et relient ledit faîtage en partie haute jusqu'au bord inférieur de la toiture. On entend donc ici par "transversalement" une direction perpendiculaire à ladite direction longitudinale du faîtage et de la bâche.

En général, la bâche est constituée d'un film souple posé sur une ossature constituée d'arceaux métalliques régulièrement espacés. Elle est maintenue solidaire de la structure le long d'un bord longitudinal du bâtiment au faîtage ou en partie basse, de préférence au faîtage, et est fixée le long d'une génératrice dudit tube d'enroulement sur son bord longitudinal opposé. Le film utilisé peut être une paroi simple ou double afin de réaliser dans ce dernier cas une toiture gonflable.

Des dispositifs connus comportent plus précisément un système d'enroulement de la bâche comprenant :

1) un tube d'enroulement, le deuxième bord longitudinal de ladite bâche étant solidaire d'une génératrice dudit tube d'enroulement,
2) un moteur fixe solidaire de la toiture notamment sur un dit profilé transversal de l'ossature,

- ledit moteur entraînant en rotation sur lui-même ledit tube d'enroulement, c'est-à-dire en rotation par rapport à son axe longitudinal, par l'intermédiaire d'un bras télescopique,
- ledit bras télescopique étant à une de ses extrémités relié audit moteur et, à l'autre de ses extrémités, relié à une extrémité dudit tube d'enroulement, par l'intermédiaire d'un joint homocinétique de type cardan.

Ainsi, lorsque le moteur est actionné, il entraîne la rotation dudit tube d'enroulement qui, selon le sens de rotation provoque :

- soit l'enroulement de la bâche lorsqu'elle est déroulée, la toiture ainsi se découvrant progressivement,
- soit le déroulement de la bâche lorsqu'elle est enroulée autour dudit tube d'enroulement, la toiture se couvrant ainsi progressivement.

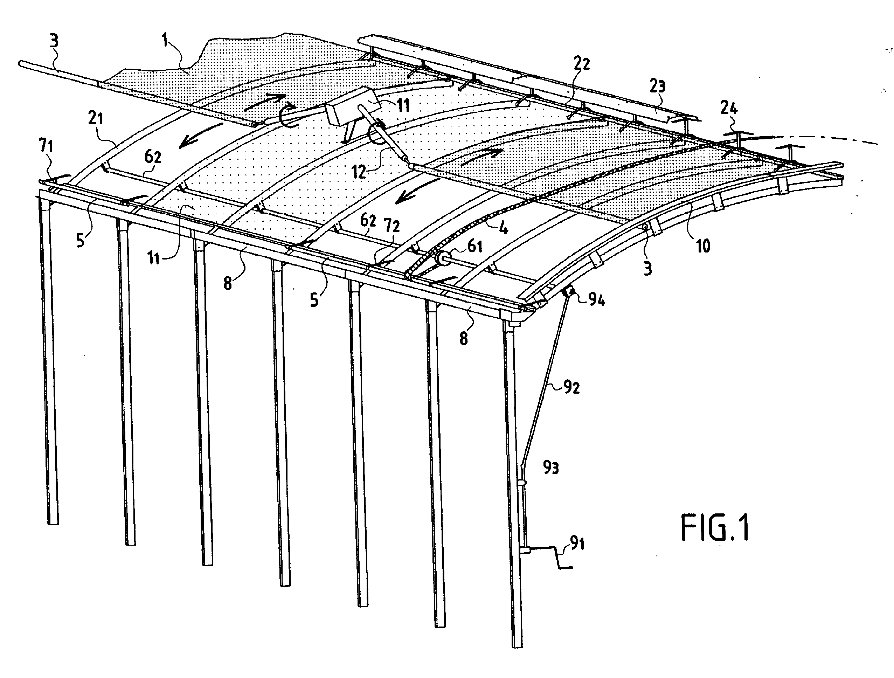

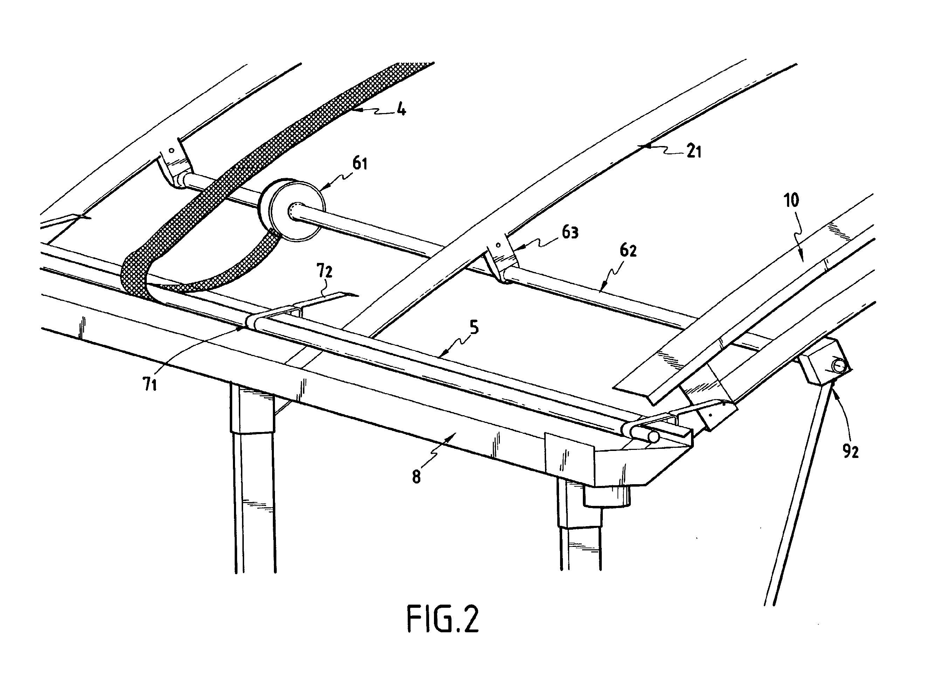

Des systèmes connus de ce type sont illustrés sur la figure 1. On retrouve ces caractéristiques connues dans le dispositif selon l'invention représenté sur les figures 2 à 6 qui seront décrites ci-après.

Le moteur utilisé dans le système de rotation du tube d'enroulement est de préférence un moto-réducteur qui peut être situé au milieu de la toiture solidaire d'un dit profilé ou en bordure de toiture. Le moteur est en général relié à deux tubes d'enroulement espacés, par l'intermédiaire de deux bras télescopiques, un de part et d'autre dudit moteur. Le moteur choisi peut aussi se situer dans le prolongement du tube d'enroulement et fixé directement à celui-ci par son arbre de sortie. Afin d'éviter la rotation du corps du moteur, ce dernier est relié à un point fixe de la structure par un bras pivotant et coulissant.

Un premier problème qui se pose dans ce type de dispositif d'enroulement de bâche est de fournir un système de blocage et verrouillage de la couverture en position fermée qui soit simple, facile et rapide à mettre en oeuvre ainsi que peu coûteux.

Dans les systèmes connus décrits ci-dessus, le tube d'enroulement en fin de course - c'est-à-dire lorsque le bras télescopique est entièrement sorti et que la bâche est déroulée - dépasse quelque peu du bord inférieur de la toiture et vient se bloquer contre celui-ci par une rotation en sens inverse et un réenroulement de la bâche. Mais ce système de blocage est peu fiable et résiste mal au vent, ce qui peut entraîner le battement de la bâche, voire le débâchage et la détérioration de la bâche si le vent est suffisamment fort.

En outre, les bâches des serres agricoles et horticoles sont réalisées en matériau thermoplastique, en général en polyéthylène très fin d'épaisseur de l'ordre de 100 à 500 microns, sujet à fluage, notamment à une élongation pouvant atteindre jusqu'à 5% de leur longueur selon les conditions de température élevée, d'où il résulte un déblocage du tube d'enroulement.

On a proposé des solutions de blocage à l'aide d'une pluralité de crochets ou de sangles régulièrement espacés reliant les bords longitudinaux de la toiture et de la bâche, mais leur mise en place est longue et fastidieuse.

Par ailleurs, il est difficile de fournir un système mécanisé de blocage lorsque la bâche est un film souple, fin et fragile et surtout sujet à fluage.

Un premier but de la présente invention est donc de fournir un système de blocage et verrouillage de la bâche en position de couverture ou position fermée, amélioré qui remédie aux inconvénients mentionnés ci-dessus.

Un autre problème dans les installations connues décrites ci-dessus réside dans le fait qu'il n'est pas possible de maintenir la bâche en position d'ouverture ou fermeture intermédiaire, c'est-à-dire partiellement enroulée ou déroulée, ce qui serait très utile pour adapter la couverture de la toiture en fonction de l'importance de l'ensoleillement extérieur à la serre. En effet, en position intermédiaire, le tube d'enroulement n'est pas bloqué et la bâche peut se soulever et battre contre la toiture en cas de vent fort, causant ainsi un débâchage ou plus grave, un déchirement de la bâche.

On a proposé pour remédier à cet inconvénient, de placer au-dessus de la bâche des profilés supérieurs. Cette solution n'est toutefois pas satisfaisante car elle implique l'édification d'une ossature de bâtiment plus complexe et plus coûteuse. En outre, l'espace nécessaire entre les profilés inférieurs sur lesquels repose la bâche et lesdits profilés supérieurs, est tel qu'il doit permettre le passage dudit tube d'enroulement de sorte qu'il n'est pas possible de plaquer suffisamment la bâche contre la toiture pour empêcher le battement de la bâche.

Un autre but de la présente invention est donc de fournir un système de blocage de la bâche qui autorise une ouverture ou fermeture partielle sans les risques mentionnés ci-dessus.

Plus généralement, le but de la présente invention est de fournir un dispositif de couverture réversible de toiture à bâche par une bâche qui soit amélioré et remédier aux inconvénients des systèmes connus antérieurs.

Pour ce faire, la présente invention fournit un dispositif de couverture réversible de toiture de bâtiments par une bâche selon l'invention dans lequel :

ω̄ ladite bâche comprend deux bords longitudinaux dont :

- un premier bord longitudinal supérieur est fixé en partie haute de la toiture, de préférence au faîtage ;

- un deuxième bord longitudinal inférieur est solidaire d'un tube d'enroulement (3) autour duquel la bâche peut s'enrouler et se dérouler selon que l'on veut couvrir ou découvrir la toiture ;

ω̄ l'enroulement ou déroulement de ladite bâche pour couvrir ou découvrir la toiture se fait à l'aide d'un organe (11), de préférence motorisé, permettant d'actionner en rotation ledit tube d'enroulement (3), et ainsi de déplacer ledit tube d'enroulement le long de ladite toiture.

Plus particulièrement, dans le dispositif selon l'invention :

- ladite toiture comprend une ossature constituée de profilés ($2_1$, $2_2$), ledit premier bord longitudinal supérieur est fixé de long d'un profilé longitudinal de ladite ossature en partie haute de la toiture, de préférence au faîtage,
- ladite bâche en position de couverture reposant sur des profilés transversaux droits ou incurvés de ladite ossature, et
- ledit tube d'enroulement se déplaçant le long de ladite direction transversale de ladite toiture.

Lesdits profilés transversaux de l'ossature de la toiture peuvent être droits ou incurvés, selon que la toiture est elle-même plane ou incurvée, notamment en forme d'arche, auquel cas lesdits profilés transversaux sont appelés arceaux. Lesdits profilés sont en général métalliques. Lesdits profilés de l'ossature servent de support à des films, plaques cintrées ou panneaux souples, semi-rigides ou rigides, de préférence transparents ou translucides, notamment des films souples en polyéthylène ou PVC, ou des plaques cintrées semi-rigides en PVC ou polycarbonate, ou des panneaux rigides en polycarbonate ou en verre dans le cas où le bâtiment est une serre.

On entend ici par "direction longitudinale" la direction principale de la toiture, notamment la direction du faîtage ou encore la direction du côté de longueur constante de la bâche, quelle que soit sa position d'ouverture. La "direction transversale" s'entend ici d'une direction perpendiculaire à ladite direction longitudinale, cette direction transversale correspond à la direction du côté de ladite bâche dont la longueur est variable en fonction du taux de couverture de la toiture, et ce dans le cas où ladite bâche est de forme rectangulaire.

Par "position de couverture", on entend que la bâche couvre partiellement ou totalement la toiture. Le dispositif selon la présente invention est caractérisé en ce qu'il comprend un système de maintien et blocage de ladite bâche en position de couverture totale ou partielle, dans lequel .

- au moins une sangle (4) recouvre ladite bâche, et
- une rampe de blocage (5), de préférence tubulaire est fixée le long du bord longitudinal inférieur de la toiture, et
- ladite sangle (4) passe autour de ladite rampe de blocage (5) et est fixée à une de ses extrémités à un organe de tensionnement ($6_1$, $6_2$) par dessous la toiture,
- ledit organe de tensionnement ($6_1$, $6_2$) permettant de tendre la sangle pour maintenir la bâche contre ladite toiture en position de couverture totale ou partielle et, permettant, en outre, de bloquer ledit tube d'enroulement (3) contre ladite rampe de blocage (5) lorsque ladite bâche est en position de couverture totale.

Plus particulièrement, ladite rampe de blocage est fixée le long du bord longitudinal inférieur de la toiture en position dégagée dans le prolongement de celle-ci, à l'aide de supports, régulièrement espacés, de préférence solides desdits profilés transversaux à leur extrémité, de sorte que ladite sangle est apte à bloquer un dit tube d'enroulement contre ladite rampe de blocage et lesdits supports, en sous-face desdits supports.

On comprend que les sangles en venant plaquer ledit tube de roulement sous la toiture et contre la rampe de blocage évitent ainsi le battement de la bâche au vent et la sortie dudit tube d'enroulement en cas de fluage et détente de la bâche.

Dans un mode particulier de réalisation, ladite rampe de blocage est située légèrement en élévation par rapport à ladite toiture et dans le prolongement de celle-ci, lesdits supports de rampe étant en position légèrement inclinée vers le haut par rapport à la pente de la toiture, et coopérant de préférence avec des déflecteurs assurant un déplacement dudit tube d'enroulement depuis ladite toiture jusqu'à ladite rampe de blocage selon un plan incliné de pente descendante et d'inclinaison réduite par rapport à l'inclinaison de la pente de la toiture ou horizontale.

Plus particulièrement ladite rampe de blocage est située au-dessus d'un chéneau le long du bord longitudinal inférieur de ladite toiture.

On comprend donc que le tube d'enroulement aidé par lesdits déflecteurs en partie arrière des supports de rampe de blocage, permet de rouler le long de la pente de la toiture jusqu'à franchir la rampe, et la bâche peut se dérouler encore pendant une fraction de tour ou quelques tours pour atteindre sa fin de course sans venir se déposer au fond du chéneau, de manière à pouvoir rester prisonnier, bloqué entre la rampe de blocage, ledit support de rampe et un bord latéral du chéneau.

Dans un mode avantageux de réalisation de l'invention, ledit organe de tensionnement de la sangle comprend un tube de commande monté en sous-face de ladite toiture, de préférence sur lesdits profilés, et ledit tube de commande est équipé d'une poulie autour de laquelle la sangle est apte à s'enrouler et se tendre lorsque ladite poulie est entraînée en rotation par un organe de manoeuvre manuelle ou motorisée.

On comprend que de façon similaire, la sangle est apte à se dérouler pour adopter une position relâchée autorisant le déplacement dudit tube d'enroulement lorsque l'on veut découvrir la toiture.

Avantageusement encore, ladite poulie est fixée sur un dit tube de commande et ledit tube de commande et ladite poulie peuvent être entraînés en rotation par un organe de manoeuvre monté à une extrémité dudit tube de commande, ledit organe de manoeuvre comprenant une manivelle et une barre articulées par des joints de type cardan.

Cet organe de tensionnement de ladite sangle est un dispositif simple, fiable et peu coûteux qui permet d'atteindre complètement tous les objectifs de la présente invention compte tenu de l'utilisation saisonnière, c'est-à-dire peu fréquente, qui est faire de cet organe de tensionnement.

Dans un mode plus particulier de réalisation ledit tube d'enroulement est maintenu à une de ses extrémités contre un dit profilé transversal par une cornière et est relié à son autre extrémité par l'intermédiaire d'un joint homocinétique de type cardan, à un bras télescopique, ledit bras télescopique étant apte à être entraîné en rotation sur lui-même et entraîner ainsi la rotation dudit tube d'enroulement et ledit bras télescopique étant simultanément apte à s'allonger ou se rétracter lorsque ledit tube d'enroulement se déplace dans ladite direction transversale de manière à couvrir ou découvrir la toiture avec ladite bâche. Plus particulièrement encore ledit bras télescopique est entraîné en rotation par un moteur fixé sur un dit profilé transversal, de préférence à mi-longueur dudit profilé.

La présente invention a également pour objet un système de maintien et de blocage d'une bâche de toiture de bâtiments, apte à coopérer avec un dispositif de couverture réversible de toiture par une bâche, dans lequel :

$\bar{\omega}$ ladite bâche comprend :

- un premier bord longitudinal supérieur fixé en partie haute de la toiture, de préférence au faîtage ;
- un deuxième bord longitudinal solidaire d'un tube d'enroulement (3) autour duquel la bâche peut s'enrouler et se dérouler selon que l'on veut couvrir ou découvrir la toiture ;

$\bar{\omega}$ l'enroulement ou déroulement de ladite bâche pour couvrir ou découvrir la toiture se fait à l'aide d'un organe (11), de préférence motorisé, permettant d'actionner en rotation ledit tube d'enroulement (3), et ainsi de déplacer ledit tube d'enroulement le long de ladite toiture, système de maintien et de blocage caractérisé en ce qu'il comprend :

- au moins une sangle (4) telle que définie ci-dessus,
- au moins une rampe de blocage (5) telle que définie ci-dessus, et
- au moins un organe de tensionnement ($6_1$, $6_2$) tel que défini ci-dessus.

D'autres caractéristiques et avantages de la présente invention apparaîtront à la lumière d'un exemple détaillé de réalisation fait en référence aux figures 1 à 3 dans lesquelles :

- la figure 1 représente une vue d'ensemble en perspective d'un bâtiment de type "serre-chapelle" sur lequel une bâche est représentée en position de couverture partielle de la toiture d'un dispositif de couverture réversible de toiture de bâtiment par une bâche selon l'invention,
- la figure 2 représente un système de maintien et de blocage d'une bâche selon l'invention, apte à coopérer avec un dispositif de couverture réversible de toiture selon l'invention.
- la figure 3 représente une vue en coupe transversale d'un dispositif de couverture selon l'invention au niveau de ladite sangle de la figure 1.
- la figure 4 représente le détail du système de blocage sur une "serre-tunnel" vue en coupe.

On a représenté sur la figure 1 un bâtiment du type "serre-chapelle" comprenant une toiture constituée d'une ossature de profilés métalliques $2_1$, $2_2$. La bâche 1 est constituée d'un film dont un bord longitudinal est fixé le long du profilé longitudinal $2_2$ au faîtage de l'ossature. La toiture qui peut s'étendre sur 100 m ou plus, est recouverte par une pluralité de bâches qui peuvent s'étendre chacune sur 30 m dans la direction longitudinale du faîtage. Entre deux portions de toiture découvrable, c'est-à-dire recouverte par des bâches équipées d'un dispositif de couverture réversible selon l'invention, la toiture est recouverte par une bâche fixe $1_1$.

Le bord longitudinal opposé de la bâche est fixé à un tube d'enroulement 3 le long d'une génératrice dudit tube d'enroulement. En position débâchée, la bâche est totalement enroulée autour du tube d'enroulement 3 et vient se loger sous un tôle faîtière $2_3$ supportée par des supports $2_4$ régulièrement espacés. La bâche 1 et le tube d'enroulement 3 reposent sur des profilés transversaux $2_1$ incurvés constitutifs de l'ossature de la toiture. En bordure inférieure de la toiture, celle-ci est équipée d'un chéneau 8.

Le système d'enroulement et déroulement de la bâche comprend un moteur 11 fixé à mi-longueur d'un profilé transversal $2_1$ de l'ossature de la toiture. Mais, le moteur pourrait être fixé à toute autre position dudit profilé transversal $2_1$. Le moteur fixé rigidement au profilé transversal $2_1$ est relié à deux tubes d'enroulement 3 disposés de part et d'autre par l'intermédiaire de deux bras télescopiques 12, chacun des bras télescopiques 12 est monté en pivotement libre et par un joint homocinétique à cardan sur le moteur 11 d'une part, et sur l'extrémité des tubes d'enroulement 3. L'autre extrémité des tubes d'enroulement est maintenue en position contre lesdits profilés transversaux de l'ossature par des profilés supérieurs ou cornières 10.

Sur la figure 1, on a représenté une demi-toiture.On peut envisager de monter le même dispositif de couverture réversible de toiture par une bâche sur une demi-toiture symétrique.

Sur la figure 2, on a représenté le dispositif de maintien et blocage de la bâche contre la toiture qui comprend une sangle 4 qui peut être fixée à une de ses extrémités au profilé longitudinal $2_2$ au faîtage de la toiture ou au cheneau opposé (c'est-à-dire le cheneau de la demi-nef opposée non représentée) et à son autre extrémité à un tube de commande $6_2$ fixé dessous la toiture dans ladite direction longitudinale, par des paliers $6_3$. L'autre extrémité de la sangle 4 est enroulée dans une poulie $6_1$ montée autour du tube de commande $6_2$ et fixe par rapport à celui-ci.

Dans un mode de réalisation non représenté, on peut imaginer que les deux extrémités de la sangle sont enroulées chacune sur une dite poulie $6_1$ les deux poulies sont disposées symétriquement par rapport au faîtage sur respectivement chacune un tube de commande disposé sous la toiture symétriquement par rapport au faîtage à proximité de chacune des bordures inférieures d'extrémité de toiture et de chéneau 8. La sangle 4 vient recouvrir la bâche et le tube de déroulement puis passe à l'extérieur et autour d'un tube de blocage 5 situé au-dessus du chéneau 8, c'est-à-dire dans le prolongement et en élévation par rapport à la pente de la toiture. Le tube de blocage 5 est fixé à la toiture par l'intermédiaire de supports $7_1$, eux-mêmes coopérant avec des déflecteurs $7_2$ qui permettent au tube d'enroulement 3 de contourner dans un mouvement de variation progressive de la pente sans à-coup, ledit tube de blocage 5 lorsque la sangle 4 est relâchée et détendue.

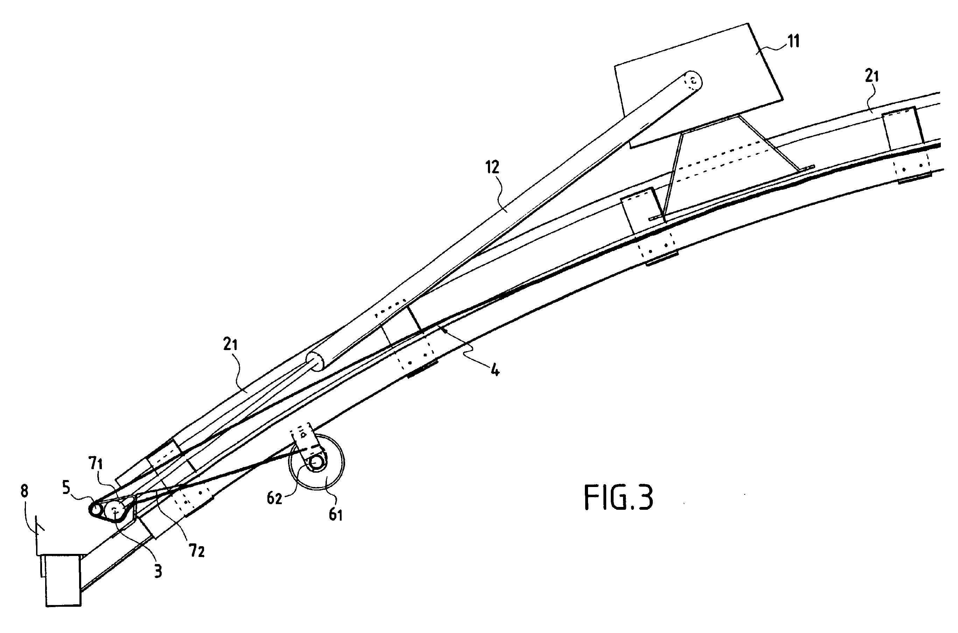

La longueur des bras télescopiques 12 en position déployée et la longueur de la bâche sont définies de manière à ce que, en fin de course, le tube d'enroulement 3 dépasse le tube de blocage 5 et ne touche pas le fond du chéneau en position totalement déployée de la bâche. On peut alors actionner en sens inverse la rotation du tube d'enroulement 3 de manière à réenrouler la bâche d'une fraction de tour ou de quelques tours, de manière à ce que en se réenroulant elle vienne également se bloquer contre ledit tube de blocage 5. A ce moment, on actionne l'organe de manoeuvre qui permet d'entraîner en rotation de tube de commande $6_2$ à l'aide de la manivelle $9_1$ qui entraîne en rotation autour de son axe longitudinal le bras $9_2$ par l'intermédiaire d'une articulation du type à cardan $9_3$ à l'autre extrémité du bras $9_2$ à un système à cardan $9_4$ entraîne la rotation du tube $6_2$ et par là même la rotation de la poulie $6_1$ qui vient donc enrouler la sangle et serrer pour bloquer le tube d'enroulement 3, comme montré sur la figure 3.

Lorsque l'on souhaite débâcher la toiture, il suffit d'actionner en rotation en sens inverse le tube de commande $6_2$ à l'aide de la manivelle $9_1$ pour relâcher la sangle 4 et permettre l'enroulement de la bâche autour du tube de roulement 3 et le déplacement du tube d'enroulement en sens inverse en direction du faîtage. Si l'on souhaite maintenir une position de couverture intermédiaire de la bâche, comme représenté sur la figure 1, il est encore possible de tendre la sangle pour maintenir le tube d'enroulement 3 plaqué contre les profilés transversaux $2_1$ de l'ossature et éviter ainsi le battement du film au vent.

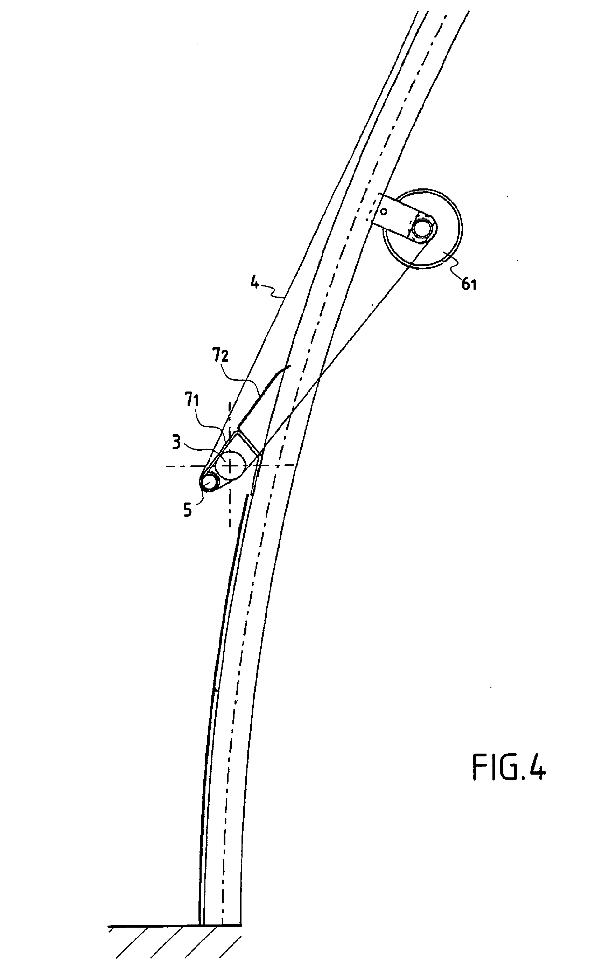

Le tube de la rampe de blocage 5 est en élévation par rapport à la structure porteuse afin de permettre au tube d'enroulement 3 de se déployer (c'est-à-dire se dérouler sur la rampe puis s'enrouler sous la rampe) sans que le mouvement de celui-ci soit gêné par la structure. Ceci est aussi vrai dans le cas de simples arceaux sans cheneaux, en tunnel par exemple, comme représenté figure 4. Sans cette légère élévation, il serait nécessaire de modifier les structures.

Dans le mode de réalisation avec cheneau de la figure 3, l'élévation du tube de blocage 5 au-dessus de la toiture permet aussi que la bâche en position totalement déployée se tende sur une hauteur suffisante sans toucher le fond du chéneau 8, tout en permettant un réenroulement autour du tube d'enroulement 3 de plusieurs tours avant de venir se bloquer contre le tube de blocage 5 en sous-face des supports de tube de blocage $7_1$.

**Revendications**

**1.** Dispositif de couverture réversible de toiture de bâtiment par une bâche (1) dans lequel :

    $\overline{\omega}$ ladite bâche comprend deux bords longitudinaux dont :

- un premier bord longitudinal supérieur est fixé en partie haute de la toiture, de préférence au faîtage ;
- un deuxième bord longitudinal inférieur est solidaire d'un tube d'enroulement (3) autour duquel la bâche peut s'enrouler et se dérouler selon que l'on veut couvrir ou découvrir la toiture ;

    $\overline{\omega}$ l'enroulement ou déroulement de ladite bâche pour couvrir ou découvrir la toiture se fait à l'aide d'un organe (11), de préférence motorisé, permettant d'actionner en rotation ledit tube d'enroulement (3), et ainsi de déplacer ledit tube d'enroulement le long de ladite toiture, dispositif **caractérisé en ce qu'**il comprend un système de maintien et blocage de ladite bâche en position de couverture totale ou partielle, dans lequel .

- au moins une sangle (4) recouvre ladite bâche, et
- une rampe de blocage (5), de préférence tubulaire est fixée le long du bord longitudinal inférieur de la toiture, et
- ladite sangle (4) passe autour de ladite rampe de blocage (5) et est fixée à une de ses extrémités à un organe de tensionnement ($6_1$, $6_2$) par dessous la toiture,
- ledit organe de tensionnement ($6_1$, $6_2$) permettant de tendre la sangle pour maintenir la bâche contre ladite toiture en position de couverture totale ou partielle et, permettant, en outre, de bloquer ledit tube d'enroulement (3) contre ladite rampe de blocage (5) lorsque ladite bâche est en position de couverture totale.

**2.** Dispositif selon la revendication 1, **caractérisé en ce que** ledit organe de tensionnement ($6_1$, $6_2$) de ladite sangle (4) comprend un tube de commande ($6_1$) monté en sous-face de ladite toiture et ledit tube de commande ($6_1$) est équipé d'une poulie ($6_2$) autour de laquelle la sangle est apte à s'enrouler et se tendre lorsque ladite poulie est entraînée en rotation par un organe de manoeuvre manuelle ($9_1$, $9_2$) ou motorisée.

**3.** Dispositif de couverture réversible de toiture de bâtiment par une bâche selon la revendication 1 ou 2, **caractérisé en ce que** :

- ladite toiture comprend une ossature constituée de profilés ($2_1$, $2_2$),
- ledit premier bord longitudinal supérieur est fixé de long d'un profilé longitudinal de ladite ossature en partie haute de la toiture, de préférence au faîtage,
- ladite bâche en position de couverture repose sur des profilés transversaux droits ou incurvés de ladite ossature, et
- ledit tube d'enroulement est apte à se déplacer le long de ladite direction transversale de ladite toiture.

**4.** Dispositif selon l'une des revendications 1 à 3, **caractérisé en ce que** ladite rampe de blocage (5) est fixée le long du bord longitudinal inférieur de la toiture en position dégagée dans le prolongement de celle-ci, à l'aide de supports ($7_1$), régulièrement espacés, de préférence solidaires desdits profilés transversaux de sorte que ladite sangle (4) est apte à bloquer ledit tube d'enroulement (3) contre ladite rampe de blocage (5) et lesdits supports ($7_1$), en sous-face desdits supports ($7_1$).

**5.** Dispositif selon la revendication 4, **caractérisé en ce que** ladite rampe de blocage est située légèrement en élévation par rapport à ladite toiture et dans le prolongement de celle-ci, lesdits supports de rampe ($7_1$) étant en position légèrement inclinée vers le haut par rapport à la pente de la toiture, et coopérant de préférence avec des déflecteurs ($7_2$) assurant un déplacement dudit tube d'enroulement (3) depuis ladite toiture jusqu'à ladite rampe de blocage selon un plan incliné de pente descendante et d'inclinaison réduite par rapport à l'inclinaison de la pente de la toiture ou horizontale.

**6.** Dispositif selon la revendication 4 ou 5, **caractérisé en ce que** ladite rampe de blocage (5) est située au-dessus d'un chéneau le long du bord longitudinal inférieur de ladite toiture.

**7.** Dispositif selon l'une des revendications 2 à 6, **caractérisé en ce que** ladite poulie ($6_2$) est fixée sur ledit tube de commande ($6_1$) et ledit tube de commande ($6_1$) et ladite poulie ($6_2$) peuvent être entraînés en rotation par un organe de manoeuvre ($9_1$, $9_2$) monté à une extrémité dudit tube de commande ($6_1$), ledit organe de manoeuvre ($9_1$, $9_2$) comprenant une manivelle ($9_1$) et une barre ($9_2$) articulées par des joints de type cardan.

**8.** Dispositif selon l'une des revendications 3 à 7, **caractérisé en ce que** ledit tube d'enroulement (3) est maintenu à une de ses extrémités contre undit profilé transversal ($2_1$) par une cornière (10) et est relié à son autre extrémité par l'intermédiaire d'un joint homocinétique de type cardan, à un bras télescopique (12), ledit bras télescopique (12), étant apte à être entraîné en rotation sur lui-même et entraîner ainsi la rotation dudit tube d'enroulement et ledit bras télescopique étant simultanément apte à s'allonger ou se rétracter lorsque ledit tube d'enroulement (3) se déplace dans ladite direction transversale de manière à couvrir ou découvrir la toiture avec ladite bâche.

**9.** Dispositif selon la revendication 8, **caractérisé en ce que** ledit bras télescopique (12) est entraîné en rotation par un moteur fixé sur undit profilé transversal (21), de préférence à mi-longueur dudit profilé transversal.

**10.** Dispositif selon l'une des revendications 1 à 9, **caractérisé en ce que** ledit bâtiment est une serre à usage agricole ou horticole, et ladite bâche est un film thermoplastique de faible épaisseur sujet à fluage.

**11.** Système de maintien et de blocage d'une bâche de toiture de bâtiments, apte à coopérer avec un dispositif de couverture réversible de toiture par une

bâche, dans lequel :

ω̄ ladite bâche comprend :

- un premier bord longitudinal supérieur fixé en partie haute de la toiture, de préférence au faîtage ;
- un deuxième bord longitudinal solidaire d'un tube d'enroulement (3) autour duquel la bâche peut s'enrouler et se dérouler selon que l'on veut couvrir ou découvrir la toiture ;

ω̄ l'enroulement ou déroulement de ladite bâche pour couvrir ou découvrir la toiture se fait à l'aide d'un organe (11), de préférence motorisé, permettant d'actionner en rotation ledit tube d'enroulement (3), et ainsi de déplacer ledit tube d'enroulement le long de ladite toiture, système de maintien et de blocage **caractérisé en ce qu'**il comprend :

- au moins une sangle (4) telle que définie dans l'une des revendications 1 à 7,
- au moins une rampe de blocage (5) telle que définie dans l'une des revendications 1 à 7, et
- au moins un organe de tensionnement ($6_1$, $6_2$) tel que défini dans l'une des revendications 1 à 7.

FIG.1

FIG.2

FIG.3

FIG.4

**Office européen des brevets**

## RAPPORT DE RECHERCHE EUROPEENNE

Numéro de la demande

EP 02 35 8008

### DOCUMENTS CONSIDERES COMME PERTINENTS

| Catégorie | Citation du document avec indication, en cas de besoin, des parties pertinentes | Revendication concernée | CLASSEMENT DE LA DEMANDE (Int.Cl.7) |
|---|---|---|---|
| A | WO 98 14672 A (JADERLOON COMPANY INC ;LOONEY DONALD F (US)) 9 avril 1998 (1998-04-09) * page 6, ligne 17 - page 11, ligne 10; figures * | 1,10,11 | A01G9/14 A01G9/24 E04H15/54 |
| A | FR 2 545 146 A (MARGERIT PAUL) 2 novembre 1984 (1984-11-02) * page 2, ligne 17 - page 3, ligne 2; figures * | 1,11 | |
| A | FR 2 282 027 A (AGRINOVA SPA) 12 mars 1976 (1976-03-12) * page 2, ligne 40 - page 5, ligne 6; figures * | | |

**DOMAINES TECHNIQUES RECHERCHES (Int.Cl.7)**

A01G
E04H
E06B

Le présent rapport a été établi pour toutes les revendications

| Lieu de la recherche | Date d'achèvement de la recherche | Examinateur |
|---|---|---|
| MUNICH | 26 septembre 2002 | Schlichting, N |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

& : membre de la même famille, document correspondant

EPO FORM 1503 03.82 (P04C02)

**ANNEXE AU RAPPORT DE RECHERCHE EUROPEENNE
RELATIF A LA DEMANDE DE BREVET EUROPEEN NO.**    EP 02 35 8008

La présente annexe indique les membres de la famille de brevets relatifs aux documents brevets cités dans le rapport de recherche européenne visé ci-dessus.
Lesdits members sont contenus au fichier informatique de l'Office européen des brevets à la date du
Les renseignements fournis sont donnés à titre indicatif et n'engagent pas la responsabilité de l'Office européen des brevets.

26-09-2002

| Document brevet cité au rapport de recherche | | Date de publication | Membre(s) de la famille de brevet(s) | | Date de publication |
|---|---|---|---|---|---|
| WO 9814672 | A | 09-04-1998 | AU<br>CA<br>EP<br>WO<br>US | 4422497 A<br>2257237 A1<br>0929725 A1<br>9814672 A1<br>6260308 B1 | 24-04-1998<br>09-04-1998<br>21-07-1999<br>09-04-1998<br>17-07-2001 |
| FR 2545146 | A | 02-11-1984 | FR | 2545146 A1 | 02-11-1984 |
| FR 2282027 | A | 12-03-1976 | IT<br>FR | 1019952 B<br>2282027 A1 | 30-11-1977<br>12-03-1976 |

EPO FORM P0460

Pour tout renseignement concernant cette annexe : voir Journal Officiel de l'Office européen des brevets, No.12/82